(19) **Europäisches Patentamt**

**European Patent Office**

**Office européen des brevets**

(11) Veröffentlichungsnummer: **0 306 086 B1**

(12) # EUROPÄISCHE PATENTSCHRIFT

(45) Veröffentlichungstag der Patentschrift: **03.11.93**

(51) Int. Cl.⁵: **H05B 41/36**

(21) Anmeldenummer: **88201822.9**

(22) Anmeldetag: **26.08.88**

(54) **Schaltungsanordnung zum Starten einer Hochdruckgasentladungslampe.**

(30) Priorität: **03.09.87 DE 3729383**

(43) Veröffentlichungstag der Anmeldung:
**08.03.89 Patentblatt 89/10**

(45) Bekanntmachung des Hinweises auf die
Patenterteilung:
**03.11.93 Patentblatt 93/44**

(84) Benannte Vertragsstaaten:
**AT BE DE FR GB NL**

(56) Entgegenhaltungen:
**EP-A- 0 212 740**
**WO-A-85/04545**
**DE-A- 3 407 067**
**GB-A- 2 154 342**
**US-A- 4 128 789**

(73) Patentinhaber: **Philips Patentverwaltung GmbH**
**Wendenstrasse 35c**
**D-20097 Hamburg(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**BE FR GB NL AT**

(72) Erfinder: **Ganser, Hans-Günther**
**Brockenberg 7a**
**D-5190 Stolberg(DE)**
Erfinder: **Stormberg, Hans-Peter, Dr.**
**Weissdornweg 52**
**D-5190 Stolberg(DE)**

(74) Vertreter: **Peuckert, Hermann, Dipl.-Ing. et al**
**Philips Patentverwaltung GmbH,**
**Wendenstrasse 35c**
**D-20097 Hamburg (DE)**

Rank Xerox (UK) Business Services
(3.10/3.6/3.3.1)

**Beschreibung**

Die Erfindung bezieht sich auf eine Schaltungsanordnung zum Starten und Betreiben einer Hochdruckgasentladungslampe mittels eines Spannungswandlers mit wenigstens einem Halbleiterschalter, der durch eine Steuereinheit derart periodisch leitend und nicht-leitend schaltbar ist, daß die Lampe einen impulsförmigen Versorgungsstrom mit einem Tastverhältnis im Betriebszustand (Betriebstastverhältnis) zwischen 0,1 und 0,7 erhält. Unter einem impulsförmigen Versorgungsstrom sei in diesem Falle ein Lampenstrom mit sowohl unipolaren als auch bipolaren Impulsen verstanden. Ein impulsförmiger Lampenstrom wird erreich durch Versorgung der Lampe mit impulsförmiger Spannung. Das Tastverhältnis von Strom und Spannung ist dabei gleich.

Eine derartige Schaltungsanordnung ist z.B. aus der US-PS 41 28 789 bekannt. Es handelt sich hierbei um eine Vorrichtung zum Betrieb von Hochdruck-Natriumdampfentladungslampen mit einem impulsförmigen Gleichstrom, d.h. mit Hilfe von unipolaren Impulsen. Es wird mit Impulsfolgefrequenzen zwischen 50 Hz und 23 KHz gearbeitet bei einem Tastverhältnis zwischen 0,08 und 0,8. Der Versorgungsstrom geht hierbei zwischen den einzelnen Impulsen nicht auf Null zurück; es bleibt vielmehr ein sogenannter Haltestrom erhalten.

Ein Problem des Lampenbetriebs mit impulsförmiger Versorgungsspannung ist das Starten der Hochdruckentladung. Dabei ist die Phase direkt nach dem Durchschlag des Plasmas, d.h. nach dem eigentlichen Zünden der Lampe, besonders kritisch. Es ist zwar möglich, mittels eines Hochspannungsimpulses einen elektrischen Durchschlag in der Entladung zu erzeugen. Dieser reicht dann jedoch nicht aus, um eine Bogenentladung zu erzeugen.Durch Erhöhung der Energie, die man mit dem Hochspannungsimpuls in die Lampe einspeist, läßt sich das Problem verringern. Auch eine Erhöhung der Amplitude des Zündimpulses unter Beibehaltung der hineingesteckten Energie wirkt sich positiv auf den Zündvorgang aus. Ebenfalls positiv wirkt sich aus, wenn man die Impulsfolge der Startimpulse erhöht. Dabei hat sich gezeigt, daß eine Hochdruckgasentladungslampe, die mit impulsförmiger Spannung betrieben wird, schwieriger zu zünden ist als eine Lampe, die mit 50 Hz-Sinusspannung versorgt wird. Eine Erhöhung der Amplitude, des Energieinhaltes oder der Impulsfolgefrequenz des Startimpulses bedeutet in jedem Fall auch eine Erhöhung des Aufwandes, der für die elektronische Startschaltung aufgebracht werden muß.

Der Erfindung liegt daher die Aufgabe zugrunde, eine Schaltungsanordnung zum Starten und Betreiben von impulsförmig versorgten Hochdruckgasentladungslampen zu schaffen, die mit einfachen Mitteln ein sicheres Zünden der Lampe sowohl im kalten als auch im heißen Zustand ermöglicht.

Diese Aufgabe wird bei einer Schaltungsanordnung eingangs erwähnter Art gemäß der Erfindung dadurch gelöst, daß die Steuereinheit beim Starten der Lampe den Halbleiterschalter derart schaltet, daß das Tastverhältnis beim Starten (Starttastverhältnis) gegenüber dem Betriebstastverhältnis erhöht ist.

Beim Betrieb von Hochdruckgasentladungslampen mit einem impulsförmigen Versorgungsstrom mit einem Betriebstastverhältnis zwischen 0,1 und 0,7 hat sich herausgestellt, daß sich der Startvorgang wesentlich vereinfachen läßt, wenn zum Starten der Lampe und für eine gewisse Zeit danach das Tastverhältnis erhöht wird. Die notwendige Erhöhung des Tastverhältnisses beim Starten hängt dabei vom Lampentyp, der Startschaltung und dem Betriebstastverhältnis ab. Es hat sich jedoch herausgestellt, daß das Starttastverhältnis um mindestens 0,2 höher sein soll als das Betriebstastverhältnis.

Mit der Erhöhung des Tastverhältnisses beim Starten ergibt sich als Folgeproblem das Umschalten des höheren Starttastverhältnisses auf das niedrigere Betriebstastverhältnis. Beim Startvorgang liefert die Schaltungsanordnung nach der Erfindung Impulse mit einem Starttastverhältnis. Erst nach dem sicheren Zünden der Lampe darf das Tastverhältnis auf das Betriebstastverhältnis heruntergehen. Zunächst muß ein geeigneter Zeitpunkt gefunden werden, an dem das Tastverhältnis auf das Betriebstastverhältnis zurückgeht. Es genügt nämlich nicht, nur während des eigentlichen Startvorganges das Tastverhältnis zu erhöhen, weil während der Strompausen in dem daran anschließenden Zustand die Lampe umso leichter wieder verlöschen kann, je länger diese Strompausen sind. Es erscheint daher zweckmäßig, das Starttastverhältnis für zumindest einige Sekunden nach der Erstzündung der Lampe festzuhalten. Andererseits sollte das Starttastverhältnis nicht zu lange angehalten werden, da eine Erhöhung des Tastverhältnisses bei elektronischen Vorschaltgeräten (mit Stromstabilisierung) mit einer Erhöhung der Leistungsaufnahme verbunden ist. Eine vorübergehend zu hohe Leistungsaufnahme kann zu Lebensdauerproblemen führen. Aber auch bei einer Leistungsstabilisierung während der Anlaufphase sollte das Tastverhältnis vor Erreichen des stationären Betriebszustandes umgeschaltet sein, da auch bei Konstanthaltung der Leistung eine Änderung des Tastverhältnisses mit einer Änderung der Farbtemperatur und des Lichtflusses verbunden ist.

Gemäß einer Weiterbildung der Schaltungsanordnung nach der Erfindung weist die Steuereinheit daher einen Verzögerungsschalter mit einer Zeitkonstanten auf zum Anhalten des Starttastverhältnisses nach dem Zünden der Lampe über eine konstante Zeit. Vorzugsweise beträgt die Zeit, während der das Starttastverhältnis nach dem Zünden der Lampe auf seinem erhöhten Wert gehalten wird, etwa 0,5 bis 60 sec. Eine solche vorgegebene Zeitverzögerung läßt sich elektronisch leicht realisieren.

Günstiger wäre es jedoch, eine meßbare Lampeneigenschaft zu detektieren und damit das Umschalten des Tastverhältnisses zu steuern. Als hierfür geeignete Größe bietet sich z.B. bei Hochdruckentladungslampen, die in der Gasphase Quecksilber und/oder ein anderes Metall enthalten, die Lampenbrennspannung U an. Diese steigt nämlich bei derartigen Lampen nach dem Zünden kontinuierlich an, bis der stationäre Zustand erreicht ist. Gemäß einer vorteilhaften Weiterbildung der Schaltungsanordnung nach der Erfindung weist diese das Kennzeichen auf, daß die Steuereinheit in Abhängigkeit von einem der Lampenspannung proportionalen Signal nach dem Zünden der Lampe das Starttastverhältnis auf das Betriebstastverhältnis herabsetzt. Typische Werte der Lampenbrennspannung sind z.B. nach der Zündung U = 20 V, im stationären Zustand U = 90 V. Da der untere Wert vom Zustand der Elektroden abhängt und sich daher während der Lebensdauer vergrößern kann, würde man in diesem Fall das Tastverhältnis bei Erreichen einer Spannung von ca. 45 V heruntersetzen.

Das Herabsetzen des Tastverhältnisses vom Starttastverhältnis auf das Betriebstastverhältnis kann entweder sprunghaft oder kontinuierlich abfallend erfolgen. Hierfür weist die Schaltungsanordnung nach der Erfindung das weitere Merkmal auf, wonach die Steuereinheit das periodische Schalten des Halbleiterschalters nach dem Zünden der Lampe derart steuert, daß damit das Starttastverhältnis sprunghaft auf das Betriebstastverhältnis umstellbar ist.

Die Schaltungsanordnung kann auch so ausgebildet sein, daß die Steuereinheit das periodische Schalten der Halbleiterschalter derart steuert, daß damit das Starttastverhältnis kontinuierlich abfallend auf das Betriebstastverhältnis umstellbar ist.

Das Zünden von Hochdruckgasentladungslampen sowohl im kalten als auch im heißen Zustand kann darüber hinaus noch verbessert werden, wenn der Lampe während der Startphase Hochspannungs-Zündimpulse zugeführt werden. So kann in Serie mit der Hochdruckgasentladungslampe eine Sekundärwicklung eines Zündtransformators zur Erzeugung von Hochspannungs-Zündimplsen geschaltet sein, von dem eine Primärwicklung mit einer Zündeinheit verbunden ist. Die Hochspannungs-Zündimpulse werden den Impulsen des normalen Lampenversorgungsspannung überlagert. Vorzugsweise werden jedem positiven oder negativem Einzelimpuls zwei oder je nach Zündschaltungsdimensionierung und Wiederholfrequenz mehrere Hochspannungs-Zündimpulse überlagert. Auch hierbei darf das Abschalten der Zündung erst erfolgen, wenn die Lampe sicher gezündet hat. Gemäß der Erfindung ist bei einer derartigen Schaltungsanordnung die Zündeinheit an einen Ausgang des Verzögerungsschalters angeschlossen, damit die Zündeinheit nach dem Zünden der Lampe mit einer Verzögerung von mindestens 0,1 sec. abschaltbar ist.

Es hat sich als zweckmäßig erwiesen, die Zündung nicht sofort beim ersten Glimm-Bogen-Übergang abzuschalten. Sowohl bei einer impulsförmigen als auch bei sinusförmiger Versorgungsspannung kann die Lampe in den Strompausen bzw. Stromnulldurchgängen wieder verlöschen. Da durch die Lampe kein Strom fließt, setzt die Zündung zumindest nach einer kleinen Verzögerungszeit wieder ein. Legt man jedoch in dieser Startphase auch bei Stromfluß durch die Lampe Hochspannungs-Zündimpulse an deren Elektroden an, so kann die Neigung des Bogens, wieder zu verlöschen, verringert werden. Dies verkürzt den Startvorgang und erleichtert eine sichere Zündung.

Je nach Zustand und Art der Hochdruckgasentladungslampen dauert es unterschiedlich lange, bis der Glimm-Bogen-Übergang erfolgt. Bei Hochdrucknatriumdampfentladungslampen kann es auch geschehen, daß der Bogen während der Startphase auf dem Amalgam ansetzt und zwischen Amalgam und Elektrode hin- und herspringt, wobei der Bogen verlöschen kann. Zum sofortigen Wiederzünden werden dann weitere Hochspannungs-Zündimpulse benötigt. Je nach Lampe kann es somit länger als 30 sec. dauern, bis die Lampe sicher gezündet hat und keine Zündimpulse zum Weiterbrennen mehr benötigt. Ferner muß gewährleistet sein, daß nach kurzzeitigem Netzausfall die Zündung sofort wieder einsetzt. Es ist daher nicht so günstig, eine feste Zeit vorzugeben, während der die Zündimpulse erzeugt werden. Vielmehr ist es zweckmäßiger, eine Eigenschaft der Lampe selbst zum Abschalten der Zündung zu benutzen.

Gemäß einer weiteren vorteilhaften Weiterbildung der Schaltungsanordnung nach der Erfindung, bei welcher der Lampe während der Startphase zusätzliche Zündimpulse zugeführt werden, erfolgt die Abschaltung der ZÜndeinheit nach Erreichen einer vorgegebenen Höhe des Lampenstromes mit einer Verzögerung von mindestens 0,1 sec.

Nach dem Glimm-Bogen-Übergang fließt durch die Lampe ein elektrischer Strom, der in der Größenordnung des stationären Lampenstromes liegt. Der Lampenstrom ist somit eine Größe, die zum Abschalten der Zündung geeignet ist. Dieser Lampenstrom kann z.B. als Spannung gemessen werden, die über einem in Serie mit der Lampe liegenden Widerstand abfällt.

Bei einer vorteilhaften Ausführungsform der Schaltungsanordnung nach der Erfindung liegt in Serie mit der Hochdruck-Gasentladungslampe eine Drosselspule, die als Primärwicklung eines Transformators ausgebildet ist, dessen Sekundärwicklung eine dem Lampenstrom proportionale Spannung erzeugt und an den Verzögerungsschalter angeschlossen ist.

Ausführungsbeispiele nach der Erfindung werden nunmehr anhand der Zeichnung näher erläutert. Es zeigen:

Fig. 1 ein Impulsdiagramm des Stromes, mit dem eine Hochdruckgasentladungslampe betrieben werden kann,

Fig. 2 eine Schaltungsanordnung zum Starten und Betrieb einer Hochdruckgasentladungslampe, welche im Brückenzweig einer kapazitiven Halbbrücke liegt,

Fig. 3 den bei der Schaltungsanordnung nach Fig. 2 verwendeten Tastverhältnisregler mit Taktgenerator,

Fig. 4 den bei der Schaltungsanordnung nach Fig. 2 verwendeten Verzögerungsschalter und

Fig. 5 die Impulsfolgediagramme des Verzögerungsschalters nach Fig. 4,

Fig. 6 die bei der Schaltungsanordnung nach Fig. 2 verwendete Zündeinheit.

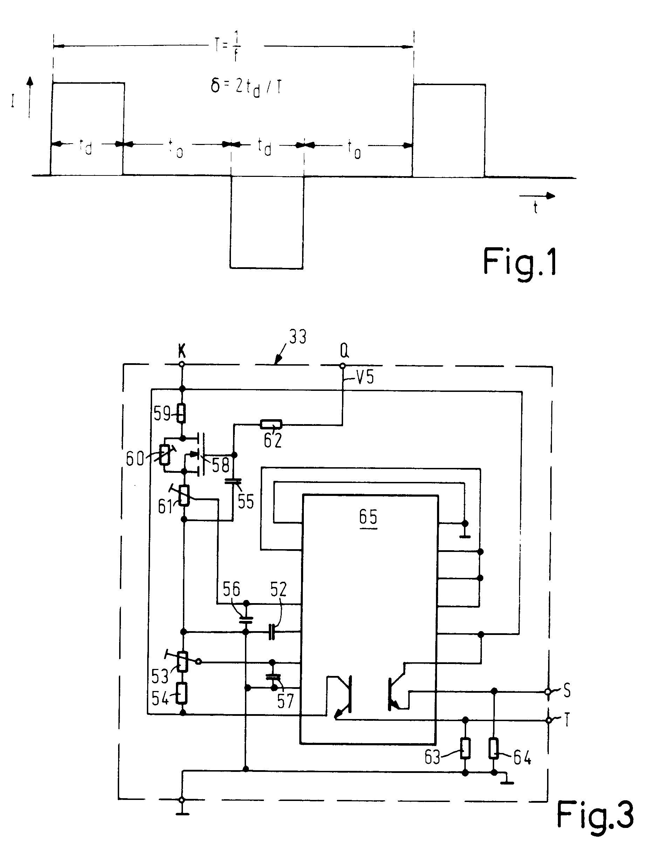

In Fig. 1 ist das Impulsdiagramm des bipolaren Versorgungsstromes I einer Hochdruckgasentladungslampe dargestellt, wobei $t_d$ die Impulsbreite der Rechteckimpulse und $t_o$ die Impulspausen sind. Das Tastverhältnis $\delta = 2\,t_d/T$ beträgt hierbei etwa 0,4. Die Impulsfolgefrequenz beträgt z.B. bei Natriumhochdruckentladungslampen etwa 300 Hz. Den einzelnen Stromimpulsen kann gegebenenfalls ein höherfrequenter Strom von z.B. 30 bis 70 KHz überlagert sein. Die Versorgungsspannung der Lampe weist dasselbe Impulsdiagramm auf.

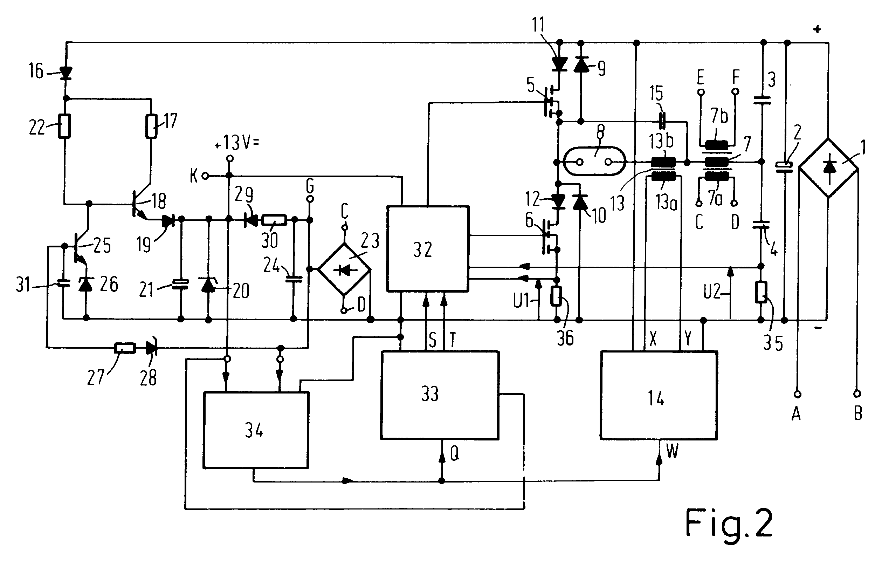

In Fig. 2 sind mit A und B Eingangsklemmen zum Anschließen an ein Wechselspannungsquelle von z.B. 220 V, 50 Hz bezeichnet. An diese Eingangsklemmen ist, gegebenenfalls über ein Hochfrequenznetzfilter, ein Brückengleichrichter 1 mit vier Dioden angeschlossen, dessen Ausgang ein Ladekondensator 2 parallel geschaltet ist.

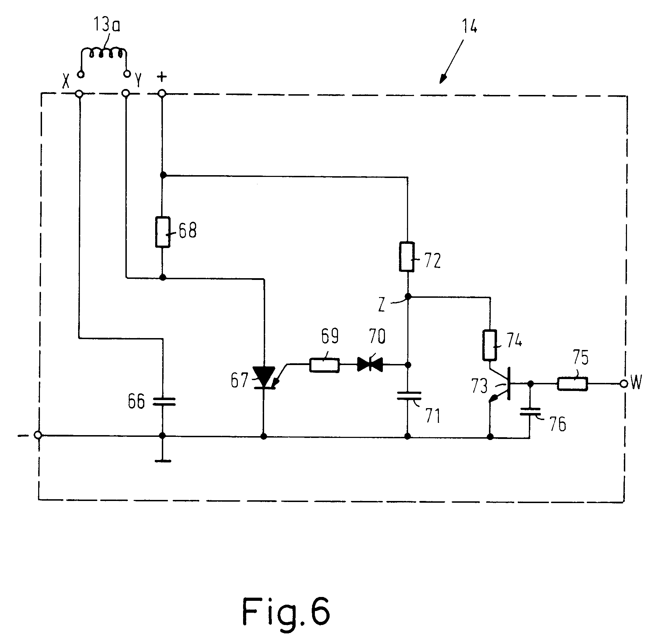

Die Gleichrichteranordnung 1, 2 bildet eine Gleichspannungsquelle, an die eine Brückenschaltung nach Art einer kapazitiven Halbbrücke angeschlossen ist, die aus zwei in Reihe liegenden Kondensatoren 3 und 4 und zwei in Reihe geschalteten Leistungs-Feldeffekttransistoren (VMOS-Transistoren) 5 und 6 besteht. Im Brückenzweig der kapazitiven Halbbrücke ist eine mit einer Drosselspule 7 in Reihe liegende Hochdruckgasentladungslampe 8 angeordnet. Die Drosselspule 7 bildet die Primärwicklung eines Transformators. Parallel zu jedem der Transistoren 5 und 6 liegt eine Freilaufdiode 9 bzw. 10, welche die Aufgabe hat, die beim Abschalten des jeweils angesteuerten Transistors in der Drosselspule 7 induzierte Spannung über die Lampe 8 kurzzuschließen. Mit den beiden Transistoren 5 und 6 ist jeweils eine Diode 11 bzw. 12 in Reihe geschaltet; hierdurch wird verhindert, daß Freilaufströme über die in den Transistoren 5 und 6 integrierten Dioden fließen, wodurch eine unnötige Erwärmung der Transistoren 5 und 6 vermieden wird. Die Drosselspule 7 ist mit zwei zusätzlichen Sekundärwicklungen 7a und 7b versehen, an deren Anschlußklemmen C und D bzw. E und F Versorgungsspannungen für die Steuerelektronik abgenommen werden. Ferner befindet sich in Reihe mit der Lampe 8 eine Sekundärwicklung 13b eines Zündtransformators 13, dessen Primärwicklung 13a an eine Zündeinheit 14 angeschlossen ist, welche Zündimpulse zum Zünden der Lampe 8 liefern kann (Fig. 6). Ein Kondensator 15, der parallel über der Reihenschaltung von Lampe 8 und Zündtransformator 13 liegt, dient als Rückschlußkondensator für die vom Zündtransformator 13 erzeugten Hochspannungszündimpulse.

Die Versorgungsspannung für die Steuerelektronik wird vor dem Zünden der Hochdruckgasentladungslampe 8 aus der gleichgerichteten Netzspannung erzeugt, wobei jedoch relativ hohe Verluste auftreten. Hierfür ist parallel zum Ladekondensator 2 eine Reihenschaltung, bestehend aus einer Diode 16, einem Widerstand 17, einem Transistor 18, einer Diode 19 und einer Zenerdiode 20, geschaltet. Parallel zur Zenerdiode 20 liegt ein Ladekondensator 21. Über der Zenerdiode 20 fällt, bedingt durch den aus den Bauelementen 16 bis 20 bestehenden Spannungsteiler, am Ladekondensator 21 am Punkt K eine Hilfsversorgungsspannung von z.B. 13 V= ab. Durch einen der Basis des Transistors 18 vorgeschalteten Widerstand 22 ist der Transistor 18 zunächst leitend geschaltet.

Wenn die Lampe 8 gezündet hat, wird in der Sekundärwicklung 7a der Drosselspule 7 eine stromabhängige hochfrequente Spannung erzeugt. Diese an den Klemmen C und D der Sekundärwicklung 7a abzunehmende Spannung wird einem Vollweggleichrichter 23 zugeführt, dessen Ausgang ein Ladekondensator 24 parallel geschaltet ist. Zwischen die Basis des Transistors 18 und der Minusleitung ist eine Reihenschaltung, bestehend aus einem Transistor 25 und einer Zenerdiode 26, geschaltet. Zwischen der Basis des Transistors 25 und dem positiven Ausgang des Vollweggleichrichters 23 liegt ein Widerstand 27 in Reihe mit einer Zenerdiode 28. Am Punkt G des Ladekondensators 24 entsteht somit eine Gleichspannung, welche den Transistor 25 nach Erreichen der Durchbruchspannung der Zenerdioden 26 und 28 über den Widerstand 27 und die Zenerdiode 28 leitend schaltet. Dadurch wird der Transistor 18 nichtleitend, wodurch die Hilfsspannungserzeugung aus der gleichgerichteten Netzspannung unterbrochen wird. Die Spannung am Punkt K wird jetzt ausschließlich aus der Sekundärwicklung 7a der Drosselspule 7 erzeugt. Zur Entkopplung beider Stromkreise dienen die Dioden 19 und 29. Ein zwischen den positiven Ausgang des Vollweggleichrichters 23 und die Diode 29 geschalteter Widerstand 30 dient zur Strombegrenzung der aus der Sekundärwicklung 7a und dem Vollweggleichrichter 23 erzeugten Versorgungsspannung am Punkt K. Ein dem Transistor 25 und der Zenerdiode 26 parallel geschalteter Kondensator 31 wird zur Siebung noch vorhandener Niederfrequenzanteile (z.B. 300 Hz) benötigt.

Die beiden als Halbleiterschalter dienenden Feldeffekt-Transistoren 5 und 6 werden mit Hilfe eines Schaltreglers 32 über jeweils eine Treiberstufe gesteuert. Die Spannungsversorgung des Schaltreglers 32 erfolgt aus der Sekundärwicklung 7b der Drosselspule 7. Der Schaltregler 32 steht mit einem Tastverhältnisregler 33 mit Taktgenerator 65 in Verbindung. Dem Tastverhältnisregler 33 wiederum ist ein Verzögerungsschalter 34 vorgeschaltet. Der Tastverhältnisregler 33 liefert zwei im festen Verhältnis zueinander stehende Rechteckimpulsfolgen, deren Impulsbreiten einstellbar sind. In Reihe mit den beiden Brückenkondensatoren 3 und 4 liegt ein Widerstand 35 und in Reihe mit den beiden Brückentransistoren 5 und 6 ein Widerstand 36. Die an den Widerständen 35 und 36 abfallenden Spannungen U1 und U2 werden dem Schaltregler 32 zugeführt und dienen als Regelgrößen zur Stabilisierung des Lampenstromes. Die eine aus dem Tastverhältnisregler 33 stammende Rechteckimpulsfolge steuert in Verknüpfung mit der am Widerstand 35 abfallenden Spannung U2 über den Schaltregler 32 den Brückentransistor 5, während die zweite Rechteckimpulsfolge mit der am Widerstand 36 abfallenden Spannung U1 den Brückentransistor 6 ansteuert.

Der Schaltregler 32 bildet zusammen mit dem Tastverhältnisregler 33 und dem Verzögerungsschalter 34 die Steuereinheit im Sinne der Erfindung.

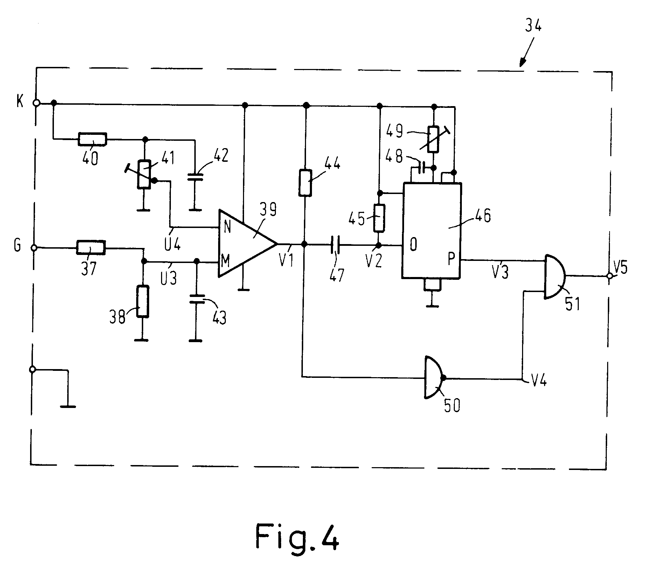

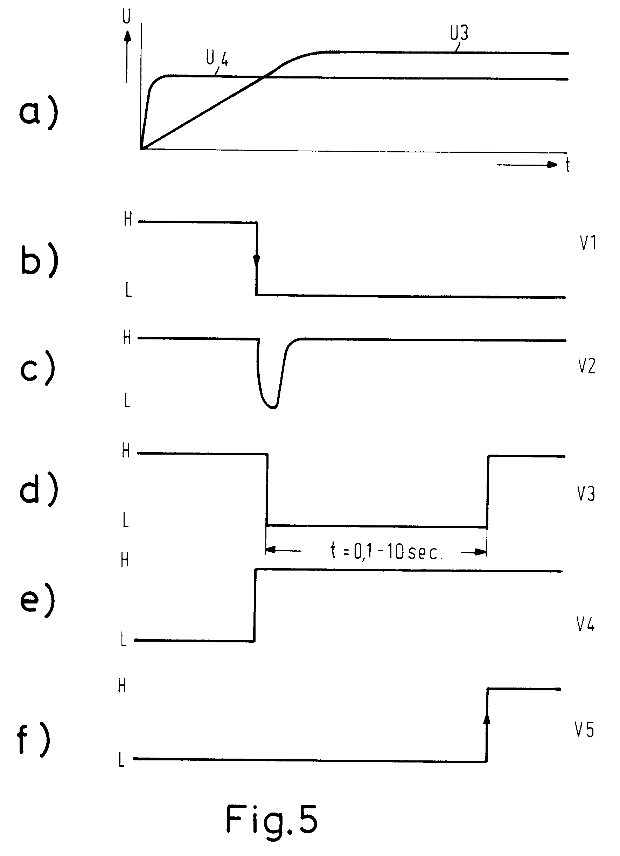

Einzelheiten des Verzögerungsschalters 34 sind in Fig. 4 dargestellt. Die Spannung am Punkt G wird über einen aus Widerständen 37 und 38 bestehenden Spannungsteiler als Spannung U3 auf den ersten Eingang M eines Komparators 39 geschaltet, wo sie verglichen wird mit der am Punkt K erzeugten Hilfsspannung, die dem zweiten Eingang N des Komparators 39 über einen aus Widerständen 40 und 41 bestehenden Spannungsteiler als Spannung U4 zugeführt wird. Kondensatoren 42 und 43 dienen zur Unterdrückung von Störspannungen. Widerstand 44 ist der Arbeitswiderstand des Komparators 39. Ein Widerstand 45 hält den Eingang O einer nachfolgenden monostabilen Kippstufe 46 im Ruhezustand auf H-Signal. Wenn die Spannung U3 während der Startphase der Lampe 8 am ersten Eingang M des Komparators 39 größer wird als die Spannung U4 am zweiten Komparatoreingang N (Fig. 5a), macht das Ausgangssignal V1 des Komparators 39 einen H-L Sprung (Fig. 5b). Hierbei wird ein zwischen dem Komparator 39 und der monostabilen Kippstufe 46 liegender Kondensator 47 und damit die Eingangsspannung V2 der monostabilen Kippstufe 46 kurzzeitig auf L-Potential gezogen (Fig. 5c), wodurch am Ausgang P der monostabilen Kippstufe 46 entsprechend der durch einen Kondensator 48 und einen Widerstand 49 bedingten Zeitkonstanten ein H-L-H Impuls V3 erzeugt wird (Fig. 5d). Für das zeitverzögerte Umschalten des Tastverhältnisses ist nur der L-H Übergang wichtig. Das Ausgangssignal V1 des Komparators 39 wird ferner auf den Eingang eines Inverters 50 geschaltet, dessen Ausgangssignal V4 (Fig. 5e) zusammen mit dem Ausgangssignal V3 der monostabilen Kippstufe 46 auf die Eingänge eines UND-Gatters 51 geschaltet werden. Dadurch wird erreicht, daß das Ausgangssignal V5 des UND-Gatters 51 und damit des Verzögerungsschalters 34 solange auf L-Signal bleibt, bis der L-H Übergang der monostabilen Kippstufe 46 erfolgt (Fig. 5f). In Fig. 5 sind die Impulsfolgediagramme des Verzögerungsschalters 34 dargestellt.

Der L-H Übergang wird nun benutzt, um im Tastverhältnisregler 33 (Fig. 3) das Tastverhältnis vom Starttastverhältnis auf das stationäre Betriebstastverhältnis umzuschalten. Als Taktgenerator 65 wurde der Baustein TL 494 CN von Texas Instr. benutzt. Seine Impulsfolgefrequenz wird bestimmt durch den Kondensator 52 und der am Spannungsteiler, bestehend aus den Widerständen 53 und 54, abfallenden Spannung. Die Kondensatoren 55, 56 und 57 verhindern Störspannungseinflüsse. Vor dem Start der Lampe 8 ist das vom Verzögerungsschalter 34 kommende Signal V5, welches dem Eingang Q des Tastverhältnisreglers 33 zugeführt wird, auf L-Potential. In diesem Falle liegt am Steuereingang K für das Tastverhältnis des Tastverhältnisreglers 33 eine vernachlässigbar kleine Spannung. Da ein im Tastverhältnisregler 33 vorhandener Feldeffekttransistor 58 noch hochohmig geschaltet ist, wird die Spannung bestimmt durch das Teilerverhältnis der Widerstände 59, 60 und 61. Sobald die Lampe 8 gezündet hat, erfolgt mit der eingestellten Verzögerungszeit am Eingang Q des Tastverhältnisreglers 33 ein L-H Übergang. Mit diesem H-Signal wird der Transistor 58 über einen Widerstand 62 leitend geschaltet. Die am Potentiometerwiderstand 61 abgegriffene und dem Eingang des Taktgenerators 65 zugeführte Steuerspannung steigt nun entsprechend dem Teilerverhältnis der Widerstände 59, 61 an, was zu einer Erniedrigung des Tastverhältnisses der Ausgangssignale an den Ausgängen S und T führt. An den Ausgangswiderständen 63 und 64 stehen jetzt Signale an, mit denen die beiden Brückentransistoren 5 und 6 über den Schaltregler 32 gesteuert werden.

Das vom Verzögerungsschalter 34 kommende Signal V5 wird außerdem dem Eingang W der Zündeinheit 14 zugeführt, deren Schaltung und Funktionsweise nunmehr anhand der Fig. 6 beschrieben wird.

Die mit Plus und Minus bezeichneten Klemmen der Zündeinheit 14 sind an den Ausgang des Brückengleichrichters 1 angeschlossen (Fig. 2). Die Klemen X und Y sind mit der Primärwicklung 13a des Zündtransformators 13 verbunden. Zwischen der Klemme X und dem Minusanschluß liegt ein Impulskondensator 66. Zwischen die Klemme Y und den Minusanschluß ist ein Thyristor 67 geschaltet, der über einen Widerstand 68 mit der Plusklemme verbunden ist. An die Zündelektrode des Thyristors 67 schließt sich ein Widerstand 69 und ein Diac 70 an, der einerseits über einen Kondensator 71 mit dem Minusanschluß und über einen Widerstand 72 mit der Plusklemme verbunden ist. Parallel zum Kondensator 71 ist eine aus einem Transistor 73 und einem Widerstand 74 bestehende Serienschaltung gelegt. Die Basis des Transistors 73 ist über einen Widerstand 75 mit dem Eingang W der Zündeinheit 14 verbunden. Ein Kondensator 76 zwischen der Basis und dem Emitter des Transistors 73 dient zur Störspanungsunterdrückung.

Wie bereits erwähnt, ist der Eingang W der Zündeinheit 14 mit dem Ausgang des Verzögerungsschalters 34 verbunden. Vor dem Starten der Lampe liegt auf dem Eingang W der Zündeinheit 14 L-Potential (Fig. 5f). Der Transistor 73 ist dadurch über den Widerstand 75 nichtleitend geschaltet. Der Impulskondensator 66 ist über den Widerstand 68 und die Primärwicklung 13a des Zündtransformators 13 aufgeladen. Über den Widerstand 72 lädt sich der Kondensator 71 bis zum Erreichen der Schwellenspannung des Diacs 70 (etwa 30 V) auf. Dann schlägt der Diac 70 durch, so daß der Entladestrom des Kondensators 71 über den Widerstand 69 den Thyristor 67 zündet. Dieser geht in seinen leitenden Zustand über, so daß sich der über den Widerstand 68 aufgeladene Impulskondensator 66 nun über die Primärwicklung 13a des Zündtransformators 13 zwischen den Anschlüssen X und Y entlädt, wodurch ein Hochspannungs-Zündimpuls in der Sekundärwicklung 13b des Zündtransformators 13 erzeugt wird. Nach jedem Zündimpuls schaltet sich der Thyristor 67 selbsttätig wieder in seinen nichtleitenden Zustand.

Für das zeitverzögerte Abschalten der Zündeinheit ist der L-H-Übergang im Verzögerungsschalter 34 bestimmend (Fig. 5f). Der Zündvorgang wiederholt sich nämlich solange, bis der Transistor 73 durch den Übergang vom L-auf das H-Signal am Eingang W der Zündeinheit 14 leitend geschaltet wird. Hierdurch wird das Potential am Punkt Z zwischen dem Widerstand 72 und dem Kondensator 71 unter die Schwellenspannung des Diacs 70 gezogen, wodurch die Zündimpulse abgeschaltet werden.

Bei einem Ausführungsbeispiel zum Starten und Betrieb einer 30 W-Natriumhochdruckentladungslampe mit bipolaren Impulsen betrug die Impulsfolgefrequenz 300 Hz, der eine höherfrequente Spannung zwischen 30 und 70 KHz überlagert war. Das Starttastverhältnis war auf etwa 0,7 und das Betriebstastverhältnis auf etwa 0,5 eingestellt. Die verwendeten Bauelemente wiesen folgende Werte auf:

| zu Fig. 2 | |
|---|---|
| Feldeffekttransistor 5 | IRF730 oder 830 |
| Feldeffekttransistor 6 | IRF730 oder 830 |
| Dioden 9, 10 | DSR 5500x |
| Dioden 11, 12 | BYV95C |
| Dioden 16, 19, 29 | BYV95C |
| Vollweggleichrichter 23 | S1WB |
| Brückengleichrichter 1 | B250 C1500/1000 |
| Zenerdiode 20 | BZX79/C13 |
| Zenerdiode 26 | BZX79C10 |
| Zenerdiode 28 | BZX79C4V7 |
| Transistor 18 | MJ340 |
| Transistor 25 | BC107 |
| Drosselspule 7 | 2 mH |
| Zündtrafo 13 | U-Kern (U15/11/E6) |
| Meßwiderstand 36 | 1 Ohm |
| Meßwiderstand 35 | 1 Ohm |
| Widerstand 22 | 180 KOhm |
| Widerstand 17 | 4,7 KOhm |
| Widerstand 27 | 12 KOhm |
| Widerstand 30 | 100 Ohm |
| Kondensator 3 | 3 x 1,5 $\mu$F |
| Kondensator 4 | 3 x 1,5 $\mu$F |
| Kondensator 15 | 22 nF |
| Kondensator 31 | 1 $\mu$F |
| Kondensator 21 | 47 $\mu$F |
| Kondensator 24 | 0,22 $\mu$F |
| Kondensator 2 | 47 $\mu$F/385 V |

| zu Fig. 3 | | |
|---|---|---|
| Taktgenerator 65 | TL 494 CN | Texas Instr. |
| Transistor 58 | VN 88 AF | Siliconix |
| Widerstand 59 | 10 KOhm | |
| Widerstand 60 | 220 KOhm | |
| Widerstand 61 | 2,2 KOhm | |
| Widerstand 53 | 2,2 KOhm | |
| Widerstand 54 | 10 KOhm | |
| Widerstand 62 | 100 KOhm | |
| Widerstand 63 | 5,6 KOhm | |
| Widerstand 64 | 5,6 KOhm | |
| Kondensator 55 | 1 $\mu$F | |
| Kondensator 56 | 68 nF | |
| Kondensator 52 | 120 nF | |
| Kondensator 57 | 68 nF | |

| zu Fig. 4 | | |
|---|---|---|
| Widerstand 40 | 100 KOhm | |
| Widerstand 37 | 100 KOhm | |
| Widerstand 38 | 4,7 KOhm | |
| Widerstand 41 | 10 KOhm | |
| Widerstand 45 | 100 KOhm | |
| Widerstand 49 | 1 MOhm | |
| Widerstand 44 | 10 KOhm | |
| Kondensator 42 | 1 $\mu$F | |
| Kondensator 43 | 1 $\mu$F | |
| Kondensator 47 | 0,1 $\mu$F | |
| Kondensator 48 | 2,2 $\mu$F | |
| Komparator 39 | LM393 | Valvo |
| Monostabile Kippstufe 46 | 1/2 HEF 4538 | Valvo |
| Gatter 51 | 1/4 HEF 4081 | Valvo |
| Gatter 50 | 1/6 4049 | Valvo |

| zu Fig. 6 | | |
|---|---|---|
| Widerstand 68 | 22 KOhm | |
| Widerstand 72 | 180 KOhm | |
| Widerstand 69 | 18 Ohm | |
| Widerstand 74 | 3,3 KOhm | |
| Widerstand 75 | 33 KOhm | |
| Kondensator 66 | 0,1 $\mu$F | |
| Kondensator 71 | 47 nF | |
| Kondensaotr 76 | 0,1 $\mu$F | |
| Diac 70 | BR 100 | Valvo |
| Thyristor 67 | BT151 | Valvo |
| Transistor 73 | BC 107 | Valvo |

**Patentansprüche**

1. Schaltungsanordnung zum Starten und Betreiben einer Hochdruckgasentladungslampe mittels eines Spannungswandlers mit wenigstens einem Halbleiterschalter, der durch eine Steuereinheit derart periodisch leitend und nichtleitend schaltbar ist, dass die Lampe einen impulsförmigen Versorgungsstrom mit einem Tastverhältnis im Betriebszustand (Betriebstastverhältnis) zwischen 0,1 und 0,7 erhält, dadurch gekennzeichnet, dass durch die Steuereinheit (32, 33, 34) beim Starten der Lampe (8) die Halbleiterschalter (5, 6) mit einem gegenüber dem Betriebstastverhältnis erhöhten Tastverhältnis beim Starten (Starttasterhältnis) schaltbar sind, und das Starttastverhältnis um mindestens 0,2 grösser ist als das Betriebstastverhältnis.

2. Schaltungsanordnung nach Anspruch 1 dadurch gekennzeichnet, dass die Steuereinheit (32, 33, 34) einen Verzögerungsschalter (34) mit einer Zeitkonstanten aufweist zum Anhalten des Starttastverhältnisses nach dem Zünden der Lampe (8) über eine konstante Zeit.

3. Schaltungsanordnung nach Anspruch 1 dadurch gekennzeichnet, dass die Steuereinheit (32, 33, 34) in Abhängigkeit von einem der Lampenspannung proportionalen Signal nach dem Zünden der Lampe (8) das Starttastverhältnis auf das Betriebstastverhältnis herabsetzt.

4. Schaltungsanordnung nach einem der Ansprüche 1 bis 3, dadurch gekennzeichnet, dass die Steuereinheit (32, 33, 34) das periodische Schalten des Halbleiterschalters (5, 6) nach dem Zünden der Lampe (8) derart steuert, dass damit das Starttastverhältnis sprunghaft auf das Betriebstastverhältnis umstellbar ist.

**5.** Schaltungsanordnung nach einem der Ansprüche 1 bis 3, dadurch gekennzeichnet, dass die Steuereinheit (32, 33, 34) das periodische Schalten des Halbleiterschalters (5, 6) derart steuert, dass damit das Starttastverhältnis kontinuierlich abfallend auf das Betriebstastverhältnis umstellbar ist.

**6.** Schaltungsanordnung nach Anspruch 2 oder 3, bei der in Serie mit der Hochdruckgasentladungslampe (8) eine Sekundärwicklung (13b) eines Zündtransformators (13) zur Erzeugung von Hochspannungs-Zündimpulsen geschaltet ist, von dem eine Primärwicklung (13a) mit einer Zündeinheit (14) verbunden ist, dadurch gekennzeichnet, dass die Zündeinheit (14) an einen Ausgang des Verzögerungsschalers (34) angeschlossen ist, damit die Zündeinheit nach dem Zünden der Lampe mit einer Verzögerung von mindestens 0,1 sec. abschaltbar ist.

**7.** Schaltungsanordnung nach Anspruch 2 und 6, dadurch gekennzeichnet, dass die Abschaltung der Zündeinheit nach Erreichen einer vorgegebenen Höhe des Lampenstromes mit einer Verzögerung von mindestens 0,1 sec. erfolgt.

**8.** Schaltungsanordnung nach Anspruch 7, dadurch gekennzeichnet, dass in Serie mit der Hochdruckgasentladungslampe (8) eine Drosselspule (7) liegt, die als Primärwicklung eines Transformators ausgebildet ist, dessen Sekundärwicklung (7a) eine dem Lampenstrom proportionale Spannung erzeugt und der an den Verzögerungsschalter (34) angeschlossen ist.

## Claims

**1.** A circuit arrangement for starting and operating a high-pressure gas discharge lamp by means of a voltage converter comprising at least one semiconductor switch which can be periodically switched to the conductive and to the non-conductive state by a control unit in such a manner that the lamp receives a pulsatory supply current having a duty cycle in the operating condition (operating duty cycle) between 0.1 and 0.7, characterized in that the control unit (32, 33, 34) can switch the semiconductor switches (5,6) upon starting of the lamp (8) with a duty cycle during starting (starting duty cycle) which is increased with respect to the operating duty cycle, and in that the starting duty cycle exceeds the operating duty cycle by at least 0. 2.

**2.** A circuit arrangement as claimed in Claim 1, characterized in that the control unit (32, 33, 34) comprises a delay switch (34) having a time constant for maintaining the starting duty cycle for a constant time after ignition of the lamp (8).

**3.** A circuit arrangement as claimed in Claim 1, characterized in that the control unit (32, 33, 34) reduces the starting duty cycle to the operating duty cycle after the ignition of the lamp (8) in dependence on a signal which is proportional to the lamp voltage.

**4.** A circuit arrangement as claimed in any one of Claims 1 to 3, characterized in that the control unit (32, 33, 34) controls the periodic switching of the semiconductor switch (5, 6) after the ignition of the lamp (8) in such a manner that the starting duty cycle can be reduced abruptly to the operating duty cycle thereby.

**5.** A circuit arrangement as claimed in any one of Claims 1 to 3, characterized in that the control unit (32, 33, 34) controls the periodic switching of the semiconductor switch (5, 6) in such a manner that the starting duty cycle can be reduced gradually to the operating duty cycle thereby.

**6.** A circuit arrangement as claimed in Claim 2 or 3, in which a secondary winding (13b) of an ignition transformer (13) for producing high-frequency ignition pulses is connected in series with the high-pressure gas discharge lamp (8) and a primary winding (13a) of this transformer is connected to an ignition unit (14), characterized in that the ignition unit (14) is connected to an output of the delay switch (34) in order that the ignition unit can be switched off with a delay of at least 0.1 s after the ignition of the lamp.

**7.** A circuit arrangement as claimed in Claims 2 and 6, characterized in that the ignition unit is switched off with a delay of at least 0.1 s after a given value of the lamp current has been attained.

**8.** A circuit arrangement as claimed in Claim 7, characterized in that a choke coil (7) is connected in series with the high-pressure gas discharge lamp (8) and takes the form of the primary winding of a transformer whose secondary winding (7a) produces a voltage proportional to the lamp current and is connected to the delay switch (34).

**Revendications**

**1.** Circuit conçu pour amorcer et faire fonctionner une lampe à décharge à haute pression au moyen d'un convertisseur de tension comportant au moins un commutateur semiconducteur qui peut être commuté périodiquement dans un état conducteur ou non-conducteur par une unité de commande de manière que la lampe reçoit un courant d'alimentation impulsionnel présentant dans l'état de fonctionnement un rapport cyclique (rapport cyclique de fonctionnement) compris entre 0,1 et 0,7, caractérisé en ce que pendant l'amorçage de la lampe (8) l'unité de commande (32, 33, 34) permet aux commutateurs semiconducteurs (5, 6) de commuter pendant l'amorçage d'un rapport cyclique (rapport cyclique d'amorçage) qui est accru vis-à-vis du rapport cyclique de fonctionnement et en ce que le rapport cyclique d'amorçage est au moins supérieur de 0,2 au rapport cyclique de fonctionnement.

**2.** Circuit selon la revendication 1, caractérisé en ce que l'unité de commande (32, 33, 34) présente un interrupteur à fonctionnement retardé (34) comportant une constante de temps pour maintenir le rapport cyclique d'amorçage après l'amorçage de la lampe (8) pendant une période de temps constante.

**3.** Circuit selon la revendication 1, caractérisé en ce qu'en fonction d'un signal proportionnel à la tension de lampe l'unité de commande (32, 33, 34) réduit le rapport cyclique d'amorçage jusqu'au rapport cyclique de fonctionnement après que la lampe (8) est amorcée.

**4.** Circuit selon l'une quelconque des revendications 1 à 3, caractérisé en ce qu'après l'amorçage de la lampe (8) l'unité de commande (32, 33, 34) commande la commutation périodique du commutateur semiconducteur (5, 6) de manière que de façon discontinue le rapport cyclique d'amorçage peut être rajusté sur le rapport cyclique de fonctionnement.

**5.** Circuit selon l'une quelconque des revendications 1 à 3, caractérisé en ce que l'unité de commande (32, 33, 34) commande la commutation périodique du commutateur semiconducteur (5, 6) de manière que de façon continue le rapport cyclique d'amorçage peut être rajusté vers le bas sur le rapport cyclique de fonctionnement.

**6.** Circuit selon la revendication 2 ou 3, dans lequel un enroulement secondaire (13b) d'un transformateur d'amorçage (13) conçu pour l'engendrement d'impulsions d'amorçage à haute tension est monté en série avec la lampe à décharge à haute pression (8), un enroulement primaire (13a) dudit transformateur étant relié à une unité d'amorçage (14), caractérisé en ce que l'une unité d'amorçage (14) est reliée à une sortie de l'interrupteur à fonctionnement retardé (34) pour que l'unité d'amorçage puisse être déconnectée avec un retard d'au moins 0,1 seconde après que la lampe est amorcée.

**7.** Circuit selon les revendications 2 et 6, caractérisé en ce que la déconnexion de l'unité d'amorçage ait lieu avec un retard d'au moins 0,1 seconde après avoir atteint une valeur prédéterminée du courant de lampe.

**8.** Circuit selon la revendication 7, caractérisé en ce qu'une bobine d'arrêt (7) conçue comme enroulement primaire d'un transformateur est montée en série avec la lampe à décharge à haute pression (8), l'enroulement secondaire (7a) dudit transformateur engendrant un tension proportionnelle au courant de lampe et ledit transformateur étant relié à l'interrupteur à fonctionnement retardé (34).

Fig.1

Fig.3

Fig.2

Fig.4

Fig.5

Fig.6